# NOUVEAU FASCICULE DE BREVET EUROPEEN

(11) **EP 0 652 420 B2**
(45) Date de publication et mention de la décision concernant l'opposition: **19.05.2004**
(45) Mention de la délivrance du brevet: 06.05.1998
(21) Numéro de dépôt: 94117473.2
(22) Date de dépôt: 05.11.1994
(51) Int. Cl.: G01F 1/68, G01F 1/38, G01L 19/00

(54) **Dispositif de mesure d'un fluide**
Flüssigkeitsmessvorrichtung
Measuring device for a fluid

(30) Priorité: 10.11.1993 FR 9313551
(43) Date de publication de la demande: 10.05.1995
(73) Titulaire: KSB S.A.S, 92230 Gennevilliers (FR)
(72) Inventeur: Berthon, Jacques, F-36250 St. Maur (FR); Guillot, Christian, F-36160 Sazeray (FR); Weiss, Alain, F-92160 Antomy (FR)
(74) Mandataire: Eidelsberg, Victor Albert

(56) Documents cités:
- EP-A- 0 392 897
- WO-A-91/12765
- AU-B- 605 184
- DE-A- 3 625 842
- US-A- 4 225 968
- US-A- 5 154 083
- IEEE TRANSACTIONS ON ELECTRON DEVICES, vol.39, no.6, Juin 1992, NEW YORK US pages 1376 - 1386, XP000271785 E. YOON 'An Integrated Mass Flow Sensor With On-Chip CMOS Interface Circuitry'

## Description

### Domaine technique

La présente invention concerne un dispositif de mesure de la pression et du débit d'un liquide.

### Etat de la technique

Un dispositif connu du document IEEE TRANSACTIONS ON ELECTRON DEVICES, vol. 39, no. 6, Juin 1992, NEW YORK US, pages 1376-1386, XP000271785 E. YOON: 'An Integrated Mass Flow Sensor with on-chip CMOS Interface Circuitry comprend un capteur de pression muni des éléments de détection permettant une mesure de pression et un capteur de débit muni des éléments de détection permettant une mesure de débit, notamment pour l'asservissement des pompes, le capteur de pression et le capteur de débit comportant un même corps mécanique, les éléments de détection permettant une mesure de pression consistant en une partie en forme de membrane qui subit un déplacement étant soumise à la pression du fluide et en un moyen de mesure de ce déplacement, les éléments de détection permettant une mesure de débit consistant en une ou en un couple de thermistances dont l'une des deux est chauffée temporairement, l'autre étant maintenue à la température du fluide.

La combinaison des informations en provenance de différents capteurs de mesure est couramment utilisée. On connaît déjà un dispositif de commande d'une installation d'alimentation en eau par le EP 0 219 360 qui possède un contrôleur de pression pour indiquer la pression dans un système de tuyaux et un contrôleur de passage de fluide pour indiquer le débit dans ce systéme. Les contrôleurs de ce dispositif fonctionnent d'une manière binaire: ou la valeur est au-dessus d'un seuil prédéfini ou elle est au-dessous. En plus, ces contrôleurs sont constitués par des éléments de détection séparés et mobiles. Tout l'arrangement est d'un grand encombrement et nécessite une grande fiabilité mécanique.

Pour simplifier et améliorer ce dispositif de détection de pression et de débit on pourrait utiliser des capteurs de pression standards,comme à titre d'exemple celui décrit dans le DE 2 549 001 A1, et des capteurs de débit couramment utilisés de type statique ou dynamique.

Ces differents capteurs connus, de pression et de débit, nécessitent à chacune de leur utilisation une mise en place particulière avec des étanchéités plus ou moins complexes. L'intégration des capteurs dans des dispositifs de mesure réalisés en grande série nécessite une grande qualification.

### Exposé de l'invention

Le but de l'invention est de simplifier la mesure de pression et de débit d'un liquide ainsi que la mise en place et l'étanchéification des moyens utilisés.

Le dispostif de mesure selon l'invention est défini à la revendication 1 et de perfectionnements aux revendications dépendantes.

Le dispositif selon l'invention permet à la fois la mesure de pression et la mesure de débit créant une capsule de mesure mano-débitmétrique. Grâce au regroupement du capteur de pression et du capteur de débit autour d'un seul corps, la mise en place et l'étanchéification se limitent à une seule pièce de relativement petit encombrement. Bien qu'assurant l'étanchéité entre le corps et ses environs, l'embout transfère intégralement la pression du liquide sur le capteur de pression. Les thermistances à sondes déportées sont placées dans des boîtiers dont l'embout comporte des ouvertures pour permettre leur pénétration dans le liquide.

Le dispositif selon l'invention est particulièrement qualifié pour l'utilisation dans un dispositif de commande d'une installation d'alimentation en eau. L'assemblage d'un tel dispositif est considérablement simplifié en limitant le nombre des opérations de montage. La fiabilité augmente par la diminution du nombre des composants et des étanchéités. En même temps la partie alimentation électrique est simplifiée, les raccordements ainsi que la gestion des paramètres mesurés.

L'étanchéité est assurée par une surépaisseur locale en forme de manchon autour des boîtiers et par le serrage initial de l'embout en élastomère sur les boîtiers.

L'utilisation d'un support se déformant sous la pression et d'un pont de jauges piézorésistives qui mesure ce déplacement en variant sa résistance électrique, offre à faible coût des résultats satisfaisants.

### Présentation des différentes figures

Les dessins en annexe illustrent l'invention:
- La fig. 1: représente en coupe axiale le dispositif selon l'invention.
- La fig. 2: représente une coupe selon la ligne AA de la fig. 1.
- La fig. 3: représente en vue d'en haut un support avec un circuit imprimé.
- La fig. 4: représente en vue d'en bas le dispositif selon l'invention
- La fig. 5: représente en coupe axiale le dispositif selon l'invention monté dans un tuyau.

### Modes de réalisation

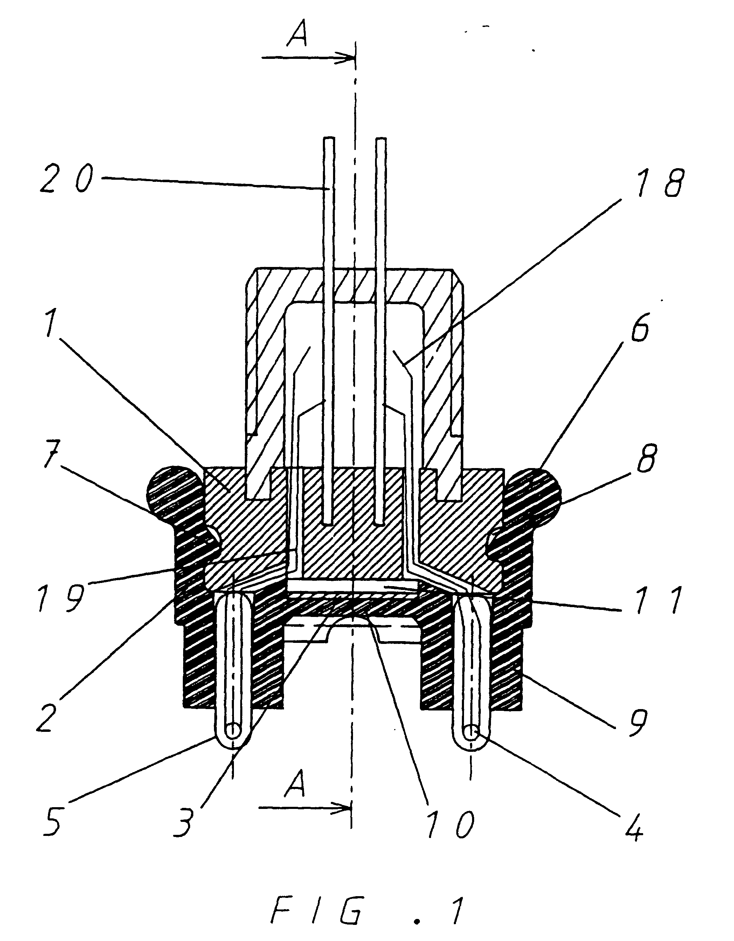

En référence à la fig. 1 des dessins, le dispositif comporte un corps 1 en matière matériau composite qui supporte un embout 2 en élastomère. L'embout 2 couvre un support 3 comparable à une lame de flexion, situé entre l'embout 2 et le corps 1. Deux thermistances 4 à sondes déportées placées dans des boîtiers 5 pénètrent l'embout 2 et sont en contact avec le fluide à mesurer.

Le support 3 fait partie d'un capteur de pression, les deux thermistances 4 font partie d'un capteur de débit. Le dispositif de mesure est intégré selon les besoins au corps d'une pompe, d'une tuyauterie ou autre.

Les étanchéités sont assurées par une seule pièce moulée en élastomère: l'embout 2. L'étanchéité du dispositif avec les environs est obtenue par compression d'un épaulement 6 de l'embout 2 entre des parois d'un orifice et le corps 1. L'écrasement initial assure une étanchéité à faible pression. L'effet hydrostatique du fluide sous pression augmente cette étanchéité avec la pression. L'épaulement 6 peut également avoir une forme de joint torique.

L'embout 2 est emboité sur le corps 1 sans collage ni autre fixation rigide. Pour assurer la tenue de l'embout 2 on peut prévoir une lèvre circonférentielle 7 qui s'accroche dans une rainure 8 correspondante du corps 1. Une empreinte dans l'embout 2 reçoit et positionne le support 3.

Les boîtiers 5, par exemple en verre, des thermistances 4 sont insérées dans deux manchons 9 faisant partie intégrante de l'embout 2. Les manchons 9 laissent libre une longueur des boîtiers 5 des thermistances 4 en contact avec le fluide, les maintiennent et les étanchent. Le serrage initial des manchons 9 sur les boîtiers 5 des thermistances 4 assure l'étanchéité à faible pression, l'effet hydrostatique augmente cette étanchéité avec la pression du fluide. L'arrière des boîtiers 5 peut être en appui sur le corps 1. La pénétration du corps 1 dans l'orifice permet de régler la position des thermistances 4 par rapport au flux du fluide.

Les thermistances 4 sont par exemple de type coéfficient de température négatif (CTN) et sont placées en contact avec le fluide. Ce contact peut être direct dans le cas du capteur à sondes déportées ou indirect dans le cas ou les thermistances sont déposées chimiquement ou mécaniquement sur le support céramique 3 du capteur de pression.

La mesure du débit s'effectue en imposant un chauffage temporaire à l'une des thermistances 4, l'autre étant maintenue à la température du fluide mesuré. La valeur du débit est calculée en mesurant le temps nécessaire à la thermistance chauffée pour revenir à son état initial. Toute modification du débit entraine une variation proportionnelle des paramètres de la sonde (température, résistance, tension, courant). Dans une plage déterminée la fréquence des impulsions est proportionnelle au débit.

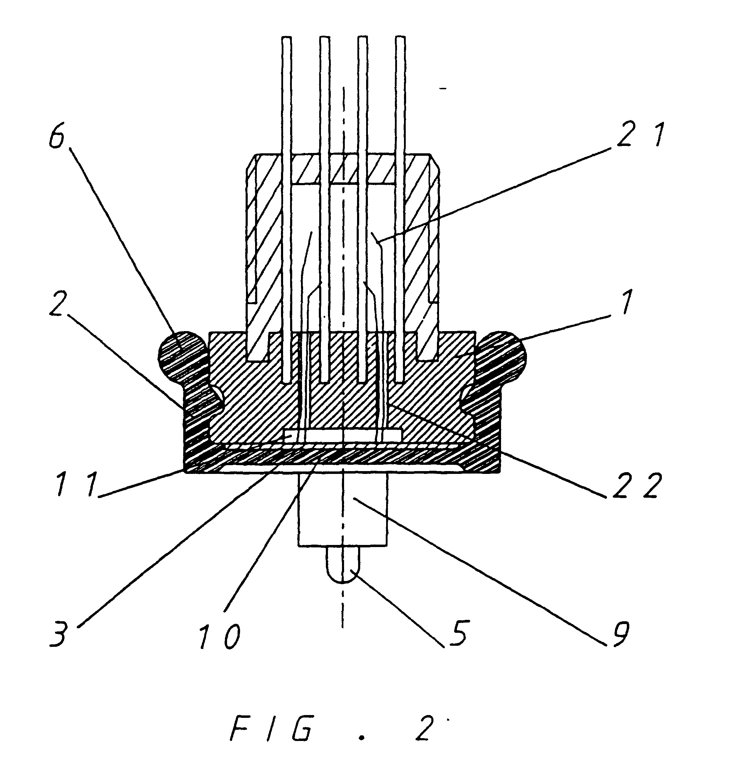

Toute la partie inférieure du dispositif est soumise à la pression du fluide transferée intégralement par une membrane élastique 10 de l'embout 2 sur le support 3 (fig. 2). Le support 3 reçoit sur toute sa surface la force uniformement répartie générée par la pression. Le support 3 est en appui sur le corps 1, à l'exception d'une zone centrale, où il possède un décrochement 11. La force de la pression du fluide crée une déformation positive au centre du décrochement 11 et négative où le support 3 reprend appui sur le corps 1. Le support 3 est de préférence en matériau céramique, par exemple en alumine, avec une déformation proportionnelle à la pression.

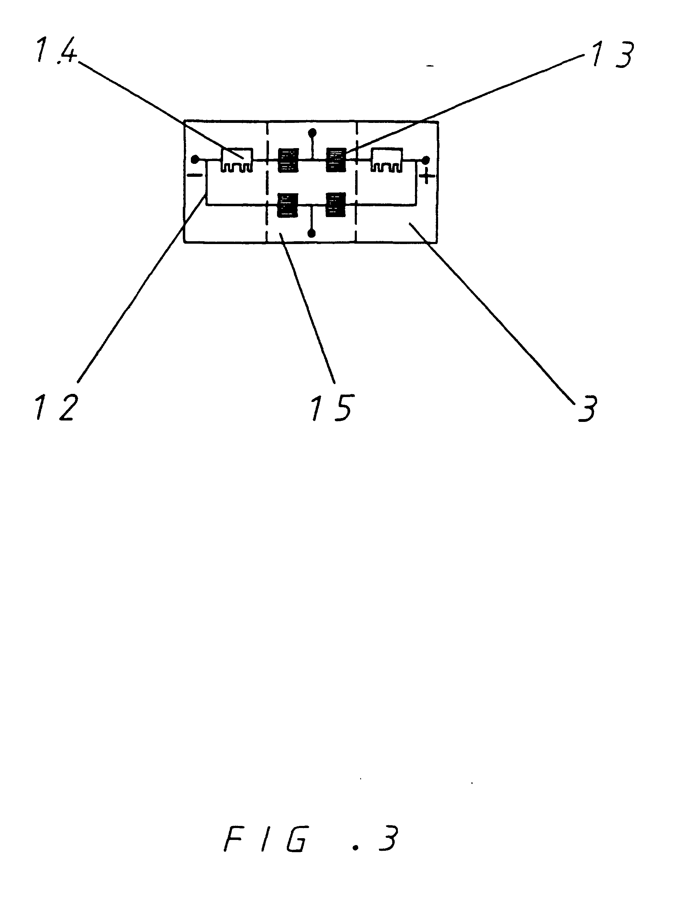

La fig. 3 montre un pont de jauges piézorésistives 12-14 en couche épaisse, comprenant des conducteurs 12 et des résistances 13 sérigraphiés, sur le support 3 pour en mesurer la déformation et la transformer en un signal électrique analogique proportionnel à la pression. L'ajustage des resistances 14 placées hors de la zone centrale de déformation assure l'equilibre du pont 12-14 à l'état libre. Sur ce support 3 des thermistances 4 peuvent être placées hors de la zone centrale 15. En ce cas, le circuit imprimé est orienté vers le corps 1 du dispositif de mesure et le verso du support est soumis directement ou au travers d'une membrane élastique au fluide.

A pression nulle du fluide le support 3 est libre et les dilatations différentielles dues aux variations de température ne genèrent pas d'effets parasites significatifs. Lorsque-la pression croît, la force générée applique le support 3 sur le corps 1 et sur la zone d'encastrement 15.

Cet assemblage n'exige pas de tolérances particulières.

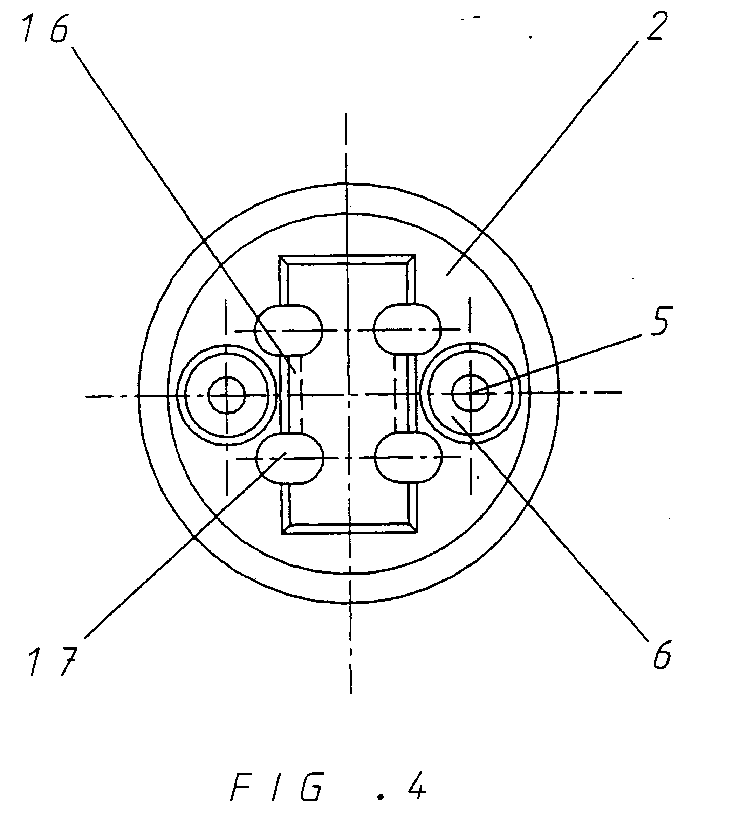

L'embout 2 peut être muni des pieds de positionnement 16 pour maintenir le support 3 et des excroissances 17 pour les fils de connection avec le pont de jauges 12-14 (fig. 4).

Les thermistances 4 sont reliées par des fils 18 conduits dans des canaux 19 du corps 1, les fils 18 pouvant être raccordés à un connecteur multibroches 20 (fig. 1).

Le pont de jauges de contraintes 12-14 est lié avec l'éxterieur par l'intermédiaire de fils 21 conduits dans des canaux 22 du corps 1 terminés par un connecteur 20. La mise à la pression de référence (atmosphérique) du support 3 se fait par le passage libre des canaux 22 (fig. 2).

Les conducteurs 18,21 provenant des éléments de mesure sont soudées sur des broches 20 insérées dans le corps 1, d'où peuvent repartir les fils.

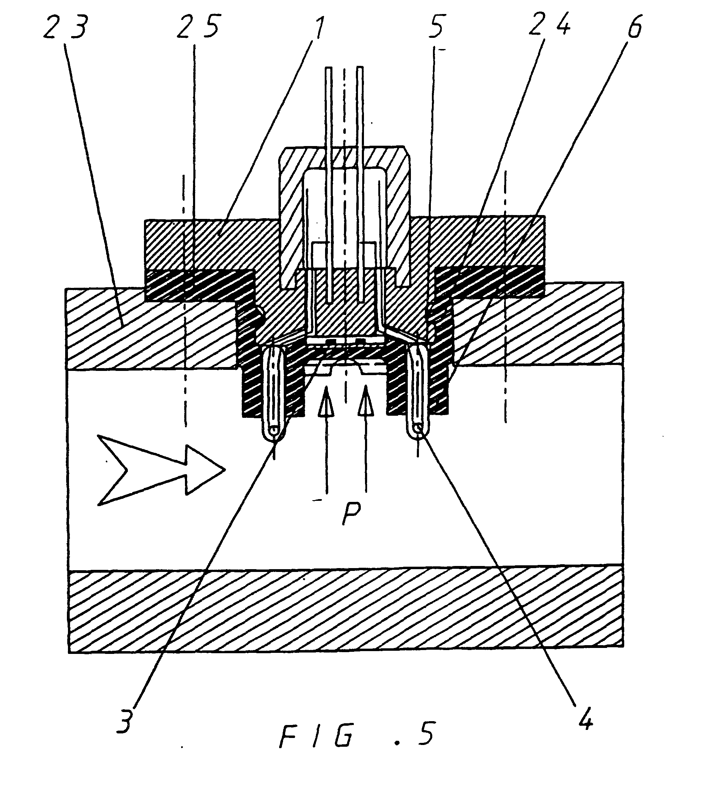

Dans un autre mode de réalisation (fig 5), la partie supérieure du corps 1 est plus grosse et vient se monter dans un lamage du tuyau 23. L'embout 24 sort de l'orifice et l'étanchéité est alors assurée par la compression axiale d'une collerette 25 faisant partie intégrante de l'embout 24. L'assemblage devient ainsi très facile.

Pour les éléments de détection permettant une mesure de débit le principe thermique de mesure offre un avantage de coût par rapport aux principes statiques à ultrason ou électromagnétique. Aux principes dynamiques avec des pièces mobiles dans le flux il offre l'avantage de petites dimensions et une grande fiabilité mécanique. Néanmoins il est possible de se servir de ces principes de mesure pour réaliser l'invention.

La réalisation avec un couple de thermistances augmente la précision de mesure grâce à une référence à la température du fluide.

### Application industrielle

Le dispositif selon l'invention est particulièrement destiné au contrôle des moteurs de pompe d'un système d'asservissement, permettant la mise en marche et l'arrêt automatique du groupe à l'ouverture ou la fermeture d'un robinet assurant en plus une protection de la pompe en cas de manque d'eau.

## Revendications

1. Dispositif de mesure de la pression et du débit d'un liquide, comprenant un capteur de pression muni d'éléments de détection permettant une mesure de pression et un capteur de débit muni d'éléments de détection permettant une mesure de débit, le capteur de pression et le capteur de débit comportant un même corps mécanique, les éléments de détection permettant une mesure du débit consistant en un couple de thermistances (4) dont l'une est chauffée temporairement et dont l'autre est maintenue à la température du liquide,
dans lequel
les éléments de détection permettant une mesure de pression consistent en un support (3) auquel la pression du liquide est transmise par une membrane (10) élastique en élastomère, qui subit un déplacement, lorsqu'elle est soumise à la pression du liquide, et en un moyen de mesure du déplacement,
le corps (1) supporte à sa partie orientée vers le liquide un embout (2) en élastomère incluant ladite membrane (10) par laquelle est transférée intégralement la pression du liquide sur le support (3) et l'embout (2) est pénétré par les thermistances (4) à sondes déportées placées dans des boîtiers (5) dans le liquide à mesurer.

2. Dispositif de mesure, selon la revendication 1, dans lequel l'embout (2) comporte deux surépaisseurs locales en forme de manchons (6) assurant l'étanchéité autour des boîtiers (5) par serrage initial.

3. Dispositif de mesure selon l'une quelconque des revendications précédentes, dans lequel les éléments de détection permettant une mesure de pression co sistent en un support (3) et un pont de jauges piézorésistives (12-14).

4. Dispositif de mesure selon la revendication 1, qui est utilisé dans un dispositif de commande d'une installation d'alimentation en eau.

## Patentansprüche

1. Meßvorrichtung für Druck und Durchflußmenge einer
Flüssigkeit mit einem Druckaufnehmer, welcher mit Erfassungselementen versehen ist, mit denen der Druck gemessen werden kann, und mit einem Aufnehmer für die Durchflußmenge, welcher mit Erfassungselementen versehen ist, mit denen die Durchflußmenge gemessen werden kann, wobei der Druckaufnehmer und der Durchflußmengenaufnehmer einen mechanischen Körper haben und die Erfassungselemente, mit denen die Durchflußmenge gemessen werden kann, ein Paar von Thermistoren (4) umfassen, von denen der eine zeitweise geheizt und der andere auf der Flüssigkeitstemperatur gehalten wird,
wobei
die Erfassungselemente, mit denen der Druck gemessen werden kann, ein Trägerelement (3), auf welches der Flüssigkeitsdruck mittels einer aus einem Elastomer gefertigten elastischen Membran (10) übertragen wird, welche eine Verlagerung erfährt, wenn sie mit dem Flüssigkeitsdruck beaufschlagt ist, sowie eine Einrichtung zur Messung dieser Verschiebung umfassen;
der Körper (1) an seinem zur Flüssigkeit weisenden Teil eine Kappe (2) aus Elastomer trägt, welche die Membran (10) einschließt, über welche der Flüssigkeitsdruck ganz auf das Trägerelement (1) übertragen wird; und die Kappe (2) von den Thermistoren (4) mit versetzt angeordneten Sonden durchsetzt ist, welche sich in Gehäusen (5) in der zu messenden Flüssigkeit befinden.

2. Meßvorrichtung nach Anspruch 1, wobei die Kappe
(2) zwei lokale Verdickungen in Form von Muffen (6) aufweist, welche durch eine Vorspannung die Dichtheit um die Gehäuse (5) herum sicherstellen.

3. Meßvorrichtung nach einem der vorhergehenden Ansprüche,
wobei die Erfassungselemente, mit denen der Druck gemessen werden kann, ein Trägerelement (3) und eine Meßbrücke mit piezoresistiven Aufnehmern (12 bis 14) umfassen.

4. Meßvorrichtung nach Anspruch 1, welche in einer
Steuereinheit einer Wasserversorgungseinrichtung verwendet wird.

## Claims

1. Apparatus for measuring the pressure and flow rate of a liquid, comprising a pressure sensor provided with detecting means which make it possible to measure pressure and a flow rate sensor provided with detecting means which make it possible to measure flow rate, the pressure sensor and the flow rate sensor comprising the same mechanical body, the detecting means for measuring the flow rate consisting of a pair of thermistors (4), one of which is temporarily heated, the other being kept at the temperature of the liquid,
wherein the detecting means for measuring pressure consist of a support (3) to which the pressure of the liquid is transmitted through a resilient elastomeric membrane (10) which undergoes displacement when it is subjected to the pressure of the liquid, and means for measuring the displacement,
the body (1) supports, on its part facing the liquid, an end piece (2) made of elastomer including said membrane (10) through which the pressure of the liquid is transferred integrally to the support (3) and the end piece (2) is penetrated by thermistors (4) with offset probes placed in housings (5) in the liquid which is to be measured.

2. Measuring apparatus according to claim 1, wherein the end piece (2) has two local thickened portions in the form of sleeves (6) ensuring a tight seal around the housings (5) by initial clamping.

3. Measuring apparatus according to any one of the preceding claims, wherein the detecting means for measuring pressure consist of a support (3) and a bridge of piezo-resistant gauges (12-14).

4. Measuring apparatus according to claim 1, which is used in an apparatus for controlling a water supply installation.
